# FASCICULE DE BREVET EUROPEEN

(11) **EP 0 419 389 B1**
(45) Date de publication et mention de la délivrance du brevet: **31.08.1994**
(21) Numéro de dépôt: 90460034.3
(22) Date de dépôt: 20.09.1990
(51) Int. Cl.: B41F 13/22, B41F 31/00, B41M 1/00, B41M 3/14, C09D 11/02

(54) **Machine d'impression, notamment sur papier, et de séchage de l'impression, encre correspondante, et procédé de fabrication d'une telle encre**
Maschine zum Drucken und zum Trocknen, insbesondere von Papier, übereinstimmende Farbe und Verfahren zum Herstellen der Farbe
Device for printing and drying, particularly paper, corresponding ink and method for manufacturing the ink

(30) Priorité: 20.09.1989 FR 8912546
(43) Date de publication de la demande: 27.03.1991
(73) Titulaire: LA POSTE, F-92777 Boulogne Billancourt Cédex (FR)
(72) Inventeur: Houzelstein, Jean, F-24640 Cubjac (FR)
(74) Mandataire: Corlau, Vincent

(56) Documents cités:
- EP-A- 0 056 623
- FR-A- 1 356 727
- US-A- 2 324 298
- PATENT ABSTRACTS OF JAPAN vol. 4, no. 34 (C-3)(516) 22 mars 1980,& JP-A-55 7812 (DAINIPPON INK KAGAKU KOGYO) 21 janvier 1980,

## Description

Le domaine de l'invention est celui de l'impression sur papier, ou sur tout autre support analogue, notamment de timbres-poste et de billets de banque, par exemple en monochromie ou en polychromie. En particulier, l'invention concerne l'impression taille-douce, et plus précisément le séchage de l'impression, à l'aide de moyens de maintien en température de la machine d'impression et d'encres adaptées.

La présente invention ne s'applique toutefois pas qu'à l'impression taille-douce, mais également à d'autres procédés d'impression, par exemple la flexogravure, l'héliogravure ou la sérigraphie.

L'invention est susceptible de s'adapter aisément aux machines d'impression déjà existantes.

Parmi toutes les techniques connues, on peut distinguer deux grands types d'impressions : l'impression en relief, qui correspond à la typographie, et l'impression en creux, comme par exemple l'héliogravure ou la taille-douce. Dans ce dernier cas, une forme gravée, cylindre ou plaque, est trempée dans l'encre, puis essuyée. L'encre reste dans les creux du cylindre, et se dépose sur le papier sous l'effet d'une pression.

En règle générale, il y a autant de groupes d'impression, et donc de tailles, ou gravures, que de couleurs. Par contre, la taille-douce est un procédé d'impression en creux permettant l'impression de plusieurs couleurs en une seule passe, par un encrage sélectif de la taille.

Le procédé taille-douce nécessite une machine lourde, lente, coûteuse, et grande consommatrice d'encres, mais est très sûr. Il est donc utilisé par exemple pour les billets de banque et les timbres.

Ce procédé utilise une épaisseur d'encre de plusieurs dizaines de µm. A titre de comparaison, une impression offset a une épaisseur d'encre de 2 à 3 µm. Cette forte épaisseur rend crucial le problème du séchage de l'encre sur son support après impression.

On connaît déjà plusieurs techniques de séchage des impressions voir par exemple US-A-2 324 298. Au niveau industriel, on peut notamment distinguer les cinq procédés de séchage suivants :
- l'impression sans encartage, où les feuilles imprimées sont reçues en petites piles et traitées avec une poudre antimaculante. Ce procédé entraîne une attente de 24 à 48 heures avant toute manipulation ;
- l'impression avec encartage, où l'on intercale une feuille antimacule entre chaque feuille imprimée, et qui nécessite aussi une attente de 24 à 48 heures avant désencartage ;
- le séchage par traitement thermique, soit par air chaud pulsé, soit par infrarouge. Ces deux techniques nécessitent une adaptation en fonction de la profondeur de la gravure, de la force capillaire du support, c'est-à-dire son absorption, et une adaptation de la sicativité, ou vitesse de séchage, de l'encre. Les supports peu absorbants ne peuvent pas être utilisés avec ces procédés;
- le séchage par rayonnement U.V, seul procédé à donner réellement satisfaction, nécessite 4 à 5 lampes au mercure, dont l'installation n'est pas toujours possible, car limitée par la distance de focalisation à respecter rigoureusement. Il requiert un support non absorbant et une épaisseur du dépôt d'encre n'excédant pas 30 µm. De plus, son action est différente suivant la couleur des encres qu'il sèche;
- le séchage par électrons, peu utilisé, en raison des coûts d'installation et d'utilisation.

Ces divers procédés entraînent soit des temps d'attente de prise d'encre très longs et donc une longue immobilisation des supports imprimés, pour l'impression avec ou sans encartage, soit l'installation de fours. Ces fours provoquent des coûts supplémentaires, et amènent de nombreuses contraintes, notamment en ce qui concerne l'absorption du support, l'épaisseur maximum du dépôt d'encre, la sicativité de l'encre, la cuisson du papier et des encres ...

L'objectif de l'invention est notamment de pallier ces divers inconvénients de l'état de la technique.

Plus précisément, l'invention a pour objectif de fournir une machine d'impression à séchage de l'impression pratiquement instantané, ne nécessitant l'utilisation de fours.

Un autre objectif de l'invention est de fournir une telle machine, permettant l'impression sur tout type de support, et en particulier sur support à très faible absorption.

L'invention a également pour objectif de fournir un traitement dans lequel le support papier ne subit aucune variation ni déformation due à la chaleur d'un four.

Un objectif complémentaire de l'invention est de fournir des encres d'impression compatibles avec une telle machine d'impression.

Selon l'invention ces objectifs sont atteints par une machine d'impression et de séchage impression taille-douce comprenant :
- des premiers moyens de maintien de la température d'application des encres dans une première plage de température,
- des seconds moyens de maintien de la température de la forme d'impression de ladite machine dans une seconde plage de température fixée, sensiblement éloignée de ladite première plage de température, et sensiblement supérieure à celle-ci, caractérisée en ce que ladite première plage de température va de 15°C à 20°C, en ce que ladite deuxième plage de température va de 85°C à 95°C et en ce que lesdites encres comprennent un vernis se comportant comme une cire, de façon à conserver lesdites encres dans un état visqueux dans ladite première plage de température, et à les rendre plus fluides dans ladite seconde plage de température et comprennent par ailleurs une charge destinée à compenser le maculage de l'impression induit par ledit vernis et/ou à faciliter le séchage de l'encre et/ou l'essuyage de ladite forme d'impression et un solvant servant à mouiller ladite charge pour la malaxer.

Ainsi, lesdites encres ont un degré de viscosité élevé dans les encriers, et se présentent sous la forme d'un rouleau. En revanche, dans la forme d'impression elles sont beaucoup moins visqueuses, ce qui permet notamment d'une part d'essuyer aisément ladite forme, et d'autre part de faciliter son vidage complet.

Toutefois, de nombreuses autres températures peuvent être sélectionnées. Il est à noter que le séchage est d'autant plus rapide que lesdites plages sont éloignées l'une de l'autre.

Avantageusement, lesdits moyens de maintien de la température d'application des encres et de la température de la forme d'impression sont constitués de deux moyens de régulation de la température indépendants.

Selon une caractéristique préférentielle de l'invention, chacun desdits moyens de maintien de la température est ainsi constitué :
- d'un circuit de circulation d'un fluide,
- de moyens d'élévation de la température dudit fluide,
- d'un thermostat, pilotant lesdits moyens d'élévation de la température.

De façon avantageuse, ladite machine comprend des moyens d'agitation desdites encres, de façon à conserver lesdites encres sous la forme d'un rouleau.

En effet, selon les différents pigments utilisés, l'encre peut avoir plus ou moins d'inertie dans les encriers. Un agitateur, faisant par exemple un mouvement de va-et-vient, permet d'éviter qu'elle dorme dans les encriers.

Outre l'utilisation de moyens de maintien en température, l'invention repose également sur l'utilisation d'encres particulières.

Ainsi, selon une autre caractéristique préférentielle de l'invention, lesdites encres comprennent un vernis se comportant comme une cire, de façon à conserver lesdites encres dans un état visqueux dans ladite première plage de température, à les rendre plus fluides dans ladite seconde plage de température, et à durcir rapidement au contact du support à imprimer, maintenu à température ambiante.

Ce vernis-cire apporte auxdites encres d'une part un pouvoir séchant, et d'autre part un pouvoir liquéfiant. En effet, il fond sous l'action de la chaleur du cylindre d'impression, ce qui donne un pouvoir de stabilité et permet que l'encre ne sèche pas dans les tailles de gravure. Par ailleurs, il se gélifie au contact du support à imprimer, qui se trouve à température ambiante.

De façon avantageuse, lesdites encres comprennent également une charge, notamment destinée à compenser le maculage de l'impression induit par ledit vernis et/ou à faciliter le séchage de l'encre et/ou l'essuyage de ladite forme d'impression.

En effet, la présence du vernis favorise le maculage et entraine un mauvais essuyage de la forme d'impression. Il est donc utile d'ajouter à l'encre un extrait sec, tel que de l'amidon, rendant l'encre plus courte, moins poisseuse.

Selon une autre caractéristique préférentielle de l'invention, lesdites encres comprennent également un solvant, servant notamment à mouiller ladite charge pour la malaxer.

Ce solvant a donc notamment pour but d'accrocher, ou d'hydrolyser, ladite charge.

Avantageusement :
- ledit vernis représente 50 % environ du poids de l'additif ajouté à une encre classique, par exemple une encre à essuyage basique ou une encre au trichloréthylène,
- ladite charge est de l'amidon de riz, représentant 38 % environ du poids dudit additif,
- ledit solvant est un hydrocarbure désaromatisé, représentant 12 % environ du poids dudit additif.

De façon avantageuse, ladite encre est fabriquée selon le procédé suivant:
- mouillage préalable de ladite charge dans ledit solvant,
- incorporation dudit vernis, par malaxage jusqu'à dispersion complète,
- saturation complète du mélange obtenu par nouvelle adjonction de ladite charge,
- broyage du tout en trois à quatre passes.

D'autres caractéristiques et avantages de l'invention apparaîtront à la lecture de la description suivante d'un mode de réalisation préférentiel de l'invention, donné à titre illustratif et non limitatif, et des dessins annexés, dans lesquels :
- la figure 1 présente de façon schématique une rotative à feuilles taille-douce quatre couleurs compatible avec le principe de l'invention ;
- la figure 2 représente schématiquement un des circuits de régulation de la température équipant les rotatives selon l'invention ;
La rotative présentée en figure 1 est destinée à l'impression taille-douce. Il est clair toutefois que l'invention peut s'appliquer à de nombreux autres procédés d'impression.

L'impression taille-douce est du type de l'impression en creux. La forme d'impression 11 peut être soit une virole, gravée au poinçon, faisant le tour du cylindre d'impression 12, soit plusieurs plaques, obtenues par galvanoplastie.

Le principe de l'impression en creux est de faire tremper un cylindre de cuivre gravé dans l'encre, puis d'essuyer le cylindre, afin que l'encre ne reste que dans les creux. L'impression sur le papier se fait alors par pression du papier sur la forme d'impression.

En règle générale, il y a dans l'imprimerie autant de groupes d'impression que de couleurs. Par contre, le procédé d'impression taille-douce permet l'impression de plusieurs couleurs en une seule passe, par un encrage sélectif. Cela est obtenu par l'utilisation de rouleaux découpés 13A, 13B, 13C, 13D, placés entre les encriers 14A, 14B, 14C, 14D, et la taille 11, ou gravure. Ainsi, l'encre ne se dépose que sur les parties non découpées de chaque rouleau 13A, 13B, 13C ou 13D, puis dans les endroits voulus dans la taille 11. Il n'y a pas de mélange ni de superposition de couleurs, mais seulement une juxtaposition des différentes couleurs, les encres utilisées étant visqueuses, et non liquides.

Après l'encrage sélectif, la taille 11 est essuyée par le rouleau d'essuyage 15, qui enlève le surplus d'encre. Ce rouleau 15 tourne dans le même sens que le cylindre d'impression 12, mais à une vitesse inférieure, de façon à provoquer un essuyage par friction. Il ne reste alors de l'encre que dans les creux de la taille 11.

Les feuilles de papier 16 sont alors amenées au contact du cylindre d'impression 12. L'impression est réalisée par pression sur la feuille de papier 16 en contact avec le cylindre d'impression 12. Cette pression est réalisée par le cylindre de pression 17, qui tourne dans le sens inverse du cylindre d'impression 12.

Par rapport aux autres types d'imprimerie, l'impression taille-douce se fait à très forte pression, de l'ordre d'une tonne par centimètre linéaire. Elle nécessite donc une machine lourde et lente. Par contre, il s'agit d'un procédé plus sûr, en ce qui concerne la précision des juxtapositions de couleurs, que ceux nécessitant plusieurs passes. La très forte pression amène certaines contraintes concernant les encres, de façon à éviter notamment les problèmes d'éclatement.

Les feuilles de papier 16 vierges sont distribuées par le margeur 18, puis plaquées contre le cylindre d'impression par un rouleau 19. Après l'impression par pression du cylindre de pression 17, les feuilles restent au contact de ce cylindre, et sont récupérées sur un tapis roulant 20, puis déposées dans la pile de réception 21.

Selon l'invention, le séchage des encres est obtenu par conduction, de façon pratiquement instantanée. Deux moyens permettent ce résultat :
- l'installation d'un système hydrothermostatique permettant de maintenir la température de la forme d'impression à 90° minimum d'une part et la température d'application des encres entre 15° et 20° d'autre part ;
- le traitement des encres par l'adjonction et l'adaptation d'un vernis bien spécifique.

En général, selon les procédés connus, les encres sont chauffées pour les rendre liquides, et les formes d'impression sont refroidies.

Selon l'invention, les encres sont conservées dans les encriers à faible température, dans un état visqueux. Elles se présentent alors sous forme de rouleaux. Elles deviennent liquides dans la taille d'impression, qui est maintenue à une température élevée. Elles se déposent alors sur le papier, conservé à température ambiante, et se figent aussitôt, se démoulant très facilement. L'écart entre la température du support à imprimer et celle de la forme d'impression catalyse le séchage de façon très importante. Les encres ne sont pas sèches à coeur, mais sont hors maculage, les feuilles pouvant donc être transportées sans problème.

Les moyens de maintien de la température sont, dans le cas du mode de réalisation préférentiel décrit, des systèmes hydrothermostatiques. Il s'agit de moyens thermostatiques classiques, susceptibles d'être remplacés par tous autres moyens, tels que des résistances chauffantes. Ces moyens peuvent être aisément adaptés sur des machines d'impression déjà existantes.

La machine selon le mode de réalisation préférentiel comprend deux circuits de régulation de la température indépendants, l'un pour la température des encriers, et l'autre pour la température de la forme d'impression.

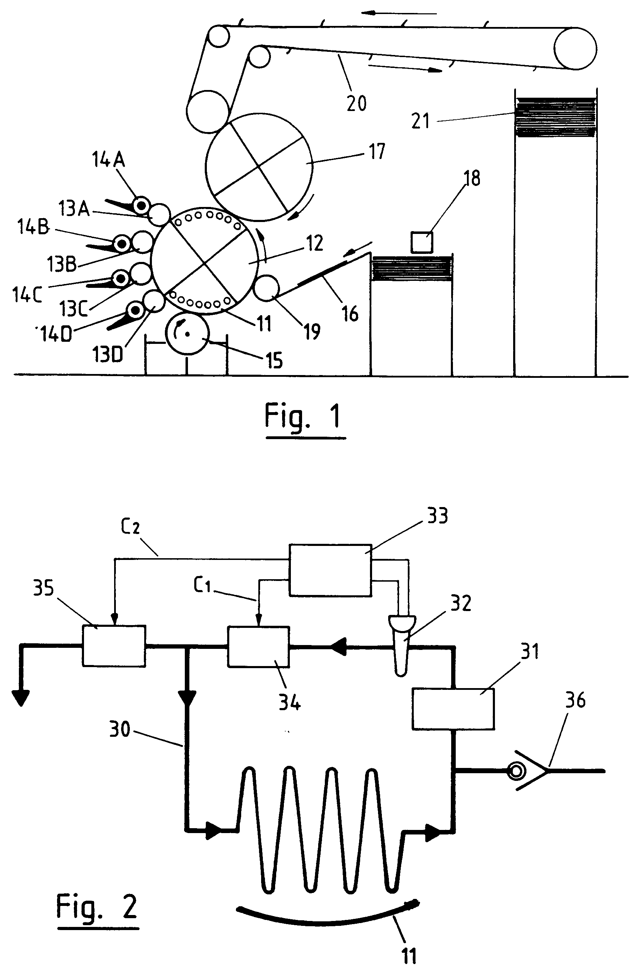

La figure 2 représente le circuit de régulation de la température de la forme d'impression. Le circuit de régularisation de la température d'application des encres est identique, sauf bien sûr en ce qui concerne les valeurs de consigne. Il s'agit d'un système hydrothermostatique classique, constitué d'un circuit fermé de circulation d'eau 30. Ce circuit passe à proximité de la forme d'impression 11, afin de lui transmettre sa température.

Une pompe 31 fait circuler l'eau dans le circuit.

Une sonde de température 32 transmet la température du liquide à un thermostat 33, qui commande un moyen de chauffage 34. Tant que la température reste supérieure à une consigne C₁, par exemple 85°, le chauffage 34 est coupé par le thermostat 33. Dès que la température devient inférieure à ladite consigne. le thermostat 33 commande la mise en marche du chauffage 34.

Le circuit dispose d'un système de sécurité, en cas d'incident, tel que la non-coupure du chauffage. Ainsi, si la température de l'eau devient supérieure à une consigne C₂, C₂ étant supérieure à C₁, par exemple C₂ = 100°, le thermostat commande l'ouverture d'une électrovanne 35, entraînant la vidange du circuit d'eau.

Une arrivée d'eau froide 36 permet de compenser les pertes en eau du circuit.

L'efficacité du séchage augmentant avec la température de la forme d'impression, il est possible d'utiliser un autre fluide que l'eau dans les circuits de régulation. On peut également élever la pression de ce fluide.

Ces moyens de maintien des températures doivent être utilisées en coopération avec des encres auxquelles on a adjoint un additif particulier, rendant leur séchage quasi instantané.

A une encre classique, au trichloréthylène ou à essuyage basique, on ajoute, en effet, dans la proportion d'environ 30 %, un additif, composé d'un vernis, ou pâte, d'une charge et d'un diluant.

Une caractéristique essentielle de l'invention est ainsi d'incorporer à une encre classique un vernis, susceptible de ce comporter comme une cire, c'est-à-dire poisseux à faible température, et devenant plus liquide sous l'effet de la chaleur. De cette façon, l'encre est fluide dans la forme d'impression, et sèche très rapidement au contact du support à imprimer, conservé à température ambiante.

Toutefois, l'utilisation d'un tel vernis-cire entraine certains problèmes, notamment en ce qui concerne l'essuyage de la forme. En effet, plus on ajoute de vernis, plus l'encre obtenue est poisseuse. Il est donc nécessaire d'utiliser une charge, pour adoucir le mélange.

Enfin, l'additif comprend un diluant, permettant l'hydrolyse de la charge. Ce diluant peut notamment être un hydrocarbure désaromatisé, et par exemple l'un des produits de la gamme Exxsol (marque déposée), commercialisée par la Société Exxon Chemical (marque déposée).

Ces composants sont avantageusement les suivants :
- vernis : B41239, distribué par la Société Lorilleux International,
- diluant : Exxsol D80, distribué par la même Société,
- charge : amidon de riz.

La pâte B41239 se comporte donc comme une cire, avec un point de fusion bas. Ainsi, ce vernis-cire apporte aux encres d'une part un pouvoir séchant, et d'autre part un pouvoir liquéfiant.

En effet, il fond sous l'action de la chaleur du cylindre d'impression, ce qui donne un pouvoir de stabilité et permet que l'encre ne sèche pas dans les tailles de gravure. Par ailleurs, il se gélifie au contact du support à imprimer, qui se trouve à température ambiante, et donne à l'impression un pouvoir glissant.

On ne peut toutefois obtenir une impression correcte avec ce seul vernis, l'encre se trouvant alors dans un état trop liquide, donnant une impression baveuse et éclatée sous l'effet de la très forte pression exercée par la presse. De plus, le mélange obtenu serait trop glissant pour l'essuyage de la forme.

L'amidon de riz permet d'éviter ces problèmes, tout en jouant un rôle d'antimaculage, facilitant donc le séchage de l'encre. Il est déjà connu d'employer de l'amidon de riz dans les encres, notamment pour obtenir un bon démoulage de l'encre, et réduire les problèmes d'essuyage.

L'amidon de riz augmente la compacité de l'encre. Celle-ci gonfle, et devient donc plus courte, ou s'adoucit, donnant une propriété de coupage à la fonction d'essuyage.

La fonction de séchage est donc obtenue par la coopération des actions du vernis et de la charge, chacune de ces deux composantes intervenant à peu près pour moitié. Le vernis utilisé doit pouvoir fixer l'amidon, de façon à constituer une sorte de dextrine. De plus, il doit être miscible à l'eau (lessive de soude, solution basique).

L'hydrocarbure désaromatisé Exxsol permet d'incorporer au mélange l'amidon de riz, qui se présente sous la forme de petits grains. Il réalise ainsi une hydrolyse de l'amidon.

Les proportions de ces trois composants dans l'additif sont avantageusement les suivantes:
- vernis B41239 : 50 %
- diluant Exxsol D80 : 12 %
- amidon de riz : 38 %.

La préparation de cet additif est une des conditions essentielles pour le bon fonctionnement de l'invention. Il est réalisé selon le procédé suivant :
- une partie de la charge, représentant 10 % du poids du mélange final est mouillé dans le diluant ;
- à cet ensemble, on incorpore le vernis, par malaxage, jusqu'à dispersion complète des trois composants : charge, solvant, vernis ;
- le mélange est alors complètement saturé par une nouvelle adjonction de charge, correspondant à 28 % du poids du mélange final ;
- le tout subit trois à quatre passes de broyage, par exemple dans une broyeuse tricylindre, jusqu'à obtention d'un degré de dispersion fixé à 8 sur la jauge North, ce qui correspond à la disparition complète des grains d'amidon.

On obtient alors un vernis, d'allongement, ou viscosité, identique à une laque transparente. Son adjonction peut alors se faire dans une encre classique.

L'encre obtenue présente une viscosité de l'ordre de 30 Pa·s (30000 centipoises) entre 15 et 20 °C, et une viscosité d'environ 10 Pa·s (10000 centipoises) à 95 °C. Il faut que l'encre soit assez fluide dans la taille, mais toutefois pas trop liquide.

Selon les pigments utilisés, qui s'avèrent plus ou moins mouillants, l'encre petit avoir de l'inertie dans les encriers. Pour éviter qu'elle ne dorme, on utilise des agitateurs, faisant un mouvement de va-et-vient, de façon que l'encre forme un rouleau.

L'utilisation de cet additif dans les encres, conjointement avec les moyens de maintien en température des encriers et de la forme d'impression, permet de ramener le temps de séchage de l'encre de 48 heures à quelques secondes, sans cuire l'encre, donc sans nécessiter de four.

La rotative utilisée dans ce mode de réalisation préférentiel a en effet permis de réaliser des productions minimum de 3 000 feuilles / heure, pour des gravures en creux allant de 8 à 60 µm, sur support couché, c'est-à-dire à très faible absorption, avec un temps de fixation de l'encre de l'ordre de 5 secondes.

Cette invention peut aussi bien s'appliquer aux rotatives à feuilles qu'aux rotatives à bobines. Elle peut être adaptée sur la plupart des machines déjà existantes, par l'adjonction de moyens de maintien des températures des encriers et de la forme d'impression, soit du type de ceux représentés dans le mode de réalisation préférentiel, soit tout autre type.

L'augmentation de la température de la forme d'impression à une température supérieure à 100 °C permet d'obtenir un temps de séchage encore plus faible.

L'invention est susceptible d'être utilisée dans de nombreux types d'impression autres que la taille-douce.

## Revendications

1. Machine d'impression et de séchage d'impression taille-douce, comprenant :
- des premiers moyens de maintien de la température d'application des encres (14A, 14B, 14C, 14D) dans une première plage de température,
- des seconds moyens de maintien de la température de la forme d'impression (11) de ladite machine dans une seconde plage de température fixée, sensiblement éloignée de ladite première plage de température, et sensiblement supérieure à celle-ci,
caractérisée en ce que ladite première plage de température va de 15°C à 20°C, en ce que ladite deuxième plage de température va de 85° C à 95° C et en ce que lesdites encres (14A, 14B, 14C, 14D) comprennent un vernis se comportant comme une cire, de façon à conserver lesdites encres (14A, 14B, 14C, 14D) dans un état visqueux dans ladite première plage de température, et à les rendre plus fluides dans ladite seconde plage de température et comprennent par ailleurs une charge destinée à compenser le maculage de l'impression induit par ledit vernis et/ou à faciliter le séchage de l'encre et/ou l'essuyage de ladite forme d'impression (11) et un solvant servant à mouiller ladite charge pour la malaxer.

2. Machine d'impression et de séchage de l'impression selon la revendication 1, caractérisée en ce que chacun desdits moyens de maintien de la température est constitué :
- d'un circuit de circulation d'un fluide (30),
- de moyens d'élevation de la température dudit fluide (34),
- d'un thermostat (33), pilotant lesdits moyens d'élévation de la température (34).

3. Machine d'impression et de séchage de l'impression suivant l'une quelconque des revendications 1 ou 2, caractérisée en ce qu'elle comprend des moyens d'agitation desdites encres (14A, 14B, 14C, 14D), de façon à conserver lesdites encres sous la forme d'un rouleau.

4. Machine d'impression et de séchage de l'impression suivant la revendication 1, caractérisée en ce que :
- ledit vernis représente 50 % environ du poids de l'additif ajouté à une encre classique, telle qu'une encre à essuyage basique ou une encre au trichloréthylène,
- ladite charge est de l'amidon de riz, représentant 38 % environ du poids dudit additif,
- ledit solvant est un hydrocarbure désaromatisé, représentant 12 % environ du poids dudit additif.

5. Encre utilisée dans des machines d'impression et de séchage de l'impression suivant l'une quelconque des revendications 1 à 4 caractérisée en ce qu'elle comprend :
- un vernis se comportant comme une cire de façon à conserver ladite encre dans un état visqueux entre 15° C et 20° C et à la rendre plus fluide entre 85° C et 95° C ;
- une charge destinée à compenser le maculage de l'impression induit par ledit vernis et/ou à faciliter le séchage de l'encre et/ou l'essuyage de ladite forme d'impression ;
- un solvant, servant à mouiller ladite charge pour la malaxer.

6. Procédé de fabrication d'une encre suivant la revendication 5, caractérisé en ce qu'il comprend les étapes suivantes :
- mouillage de ladite charge dans ledit solvant,
- incorporation dudit vernis, par malaxage jusqu'à dispersion complète,
- saturation complète du mélange obtenu par nouvelle adjonction de ladite charge,
- broyage du tout en trois à quatre passes.

## Claims

1. Intaglio printing and print-drying machine, comprising:
- first means for maintaining the temperature of application of the ink (14A, 14B, 14C and 14D) within a first temperature range,
- second means for maintaining the temperature of the printing forme (11) of the said machine within a second fixed temperature range, substantially distant from the said first temperature range, and substantially higher than it,
characterised in that the said first temperature range is from 15°C to 20°C, in that the said second temperature range is from 85°C to 95°C and in that the said inks (14A, 14B, 14C, 14D) include a varnish behaving like a wax, so as to keep the said inks (14A, 14B, 14C, 14D) in a viscous state in the said first temperature range and so as to make them more fluid in the said second temperature range, and also including a filler designed to counteract any printing set-off caused by the said varnish and/or to facilitate the drying of the ink and/or the wiping of the said printing forme (11), and a solvent serving to wet the said filler in order to mix it.

2. Printing and print-drying machine according to Claim 1, characterised in that each of the said temperature-maintaining means consists of:
- a circuit for circulating a fluid (30),
- means of raising the temperature of the said fluid (34),
- a thermostat (33), controlling the said temperature-raising means (34).

3. Printing and print-drying machine according to either one of Claims 1 or 2, characterised in that it comprises means for agitating the said inks (14A, 14B, 14C, 14D), so as to keep the said inks in the form of a roll.

4. Printing and print-drying machine according to Claim 1, characterised in that:
- the said varnish represents approximately 50% of the weight of the additive added to a conventional ink, such as an alkaline dry-wiping ink or a trichloroethylene ink,
- the said filler is rice starch, representing approximately 38% of the weight of the said additive,
- the said solvent is a de-aromatised hydrocarbon, representing approximately 12% of the weight of the said additive.

5. Ink used in printing and print-drying machines according to any one of Claims 1 to 4, characterised in that it includes:
- a varnish behaving like a wax so as to keep the said ink in a viscous state between 15°C and 20°C and to make it more fluid between 85°C and 95°C;
- a filler designed to counteract any off-set of the print caused by the said varnish and/or to facilitate drying of the ink and/or wiping of the said printing forme;
- a solvent, serving to wet the said filler in order to mix it.

6. Process for manufacturing an ink according to Claim 5, characterised in that it comprises the following steps:
- wetting of the said filler in the said solvent,
- incorporation of the said varnish, by mixing until it is completely dispersed,
- complete saturation of the mixture obtained by further addition of the said filler,
- grinding of the whole in three to four passes.

## Patentansprüche

1. Maschine zum Drucken und zum Trocknen von Druckerzeugnissen, die folgendes umfaßt:
- erste Mittel, um die Temperatur zum Aufbringen der Tinten (14A, 14B, 14C, 14D) innerhalb eines ersten Temperaturbereichs zu halten,
- zweite Mittel, um die Temperatur der Druckform (11) der Maschine innerhalb eines zweiten festgelegten Temperaturbereichs zu halten, der vom ersten Temperaturbereich weit entfernt und wesentlich höher ist,
dadurch gekennzeichnet, daß der erste Temperaturbereich zwischen 15 °C und 20 °C liegt, daß der zweite Temperaturbereich zwischen 85 °C und 95 °C liegt, und daß sich unter den Tinten (14A, 14B, 14C, 14D) ein Firnis befindet, der sich wie Wachs verhält, so daß die Tinten (14A, 14B, 14C, 14D) innerhalb des ersten Temperaturbereichs in einem zähflüssigen Zustand erhalten bleiben und im zweiten Temperaturbereich flüssiger werden, und daß sich außerdem unter den Tinten eine Charge befindet, die das vom Firnis hervorgerufene Verschmieren des Drucks verhindert, und/oder das Trocknen der Tinte und/oder das Abwischen der Druckform (11) erleichtert, und ein Lösungsmittel, das die Charge benetzt, damit sie durchmischt werden kann.

2. Maschine zum Drucken und zum Trocknen von Druckerzeugnisses gemäß Anspruch 1,
dadurch gekennzeichnet, daß jedes der Mittel zum Erhalten der Temperatur aus folgendem besteht:
- einem Kreislauf für die Zirkulation einer Flüssigkeit (30),
- Mittel, um die Temperatur der Flüssigkeit zu erhöhen (34),
- einem Thermostat (33), der die Mittel zur Temperaturerhöhung steuert (34).

3. Maschine zum Drucken und zum Trocknen von Druckerzeugnisses gemäß einem der Ansprüche 1 oder 2, gekennzeichnet durch Mittel zum Schütteln der Tinten (14A, 14B, 14C, 14D), damit die Tinten auf der Walze erhalten bleiben.

4. Maschine zum Drucken und zum Trocknen von Druckerzeugnisses gemäß Anspruch 1,
dadurch gekennzeichnet, daß:
- der Firnis etwa 50 % des Gewichts des Zusatzstoffs darstellt, der einer klassischen Tinte, wie eine alkalische Trockenwischtinte oder eine Trichloräthylentinte, zugefügt wird,
- die Charge aus Reisstärke besteht, die etwa 38 % des Gewichts des Zusatzstoffs darstellt,
- es sich bei dem Lösungsmittel um einen entaromatisierten Kohlenwasserstoff handelt, der etwa 12 % des Gewichts des Zusatzstoffs darstellt.

5. Tinte, die in Maschinen zum Drucken und zum Trocknen von Druckerzeugnissen gemäß einem der Ansprüche 1 bis 4 verwendet wird,
dadurch gekennzeichnet, daß sie folgendes enthält:
- einen Firnis, der sich wie Wachs verhält, um die Tinte zwischen 15 °C und 20 °C in einem zähflüssigen Zustand zu erhalten und zwischen 85 °C und 95 °C flüssiger werden zu lassen;
- eine Charge, die das durch den Firnis hervorgerufene Verschmieren des Drucks verhindert, und/oder das Abwischen der Druckform (11) erleichtert;
- ein Lösungsmittel, das die Charge benetzt, damit sie durchmischt werden kann.

6. Herstellungsverfahren einer Tinte gemäß Anspruch 5,
dadurch gekennzeichnet, daß es die folgenden Schritte umfaßt:
- Benetzung der Charge durch das Lösungsmittel,
- Einmischen des Firnis durch Kneten, bis zu seiner vollständigen Dispersion,
- vollständige Sättigung der erhaltenen Mischung durch erneute Zugabe der Charge,
- Zermalmen des Ganzen in drei bis vier Durchgängen.
